# EUROPÄISCHE PATENTSCHRIFT

(11) **EP 0 857 600 B1**
(45) Veröffentlichungstag und Bekanntmachung des Hinweises auf die Patenterteilung: **12.12.2001**
(21) Anmeldenummer: 98101230.5
(22) Anmeldetag: 24.01.1998
(51) Int. Cl.: B60J 10/02

(54) **Fahrzeugfenster, insbesondere für Kraftfahrzeuge, und Verfahren zur Montage eines solchen Fahrzeugfensters**
Vehicle window, especially for motor vehicles, and method for assembing such a vehicle window
Fenêtre de véhicule, notamment pour véhicules à moteur, et procédé pour monter une telle fenêtre de véhicule

(30) Priorität: 11.02.1997 DE 19705132
(43) Veröffentlichungstag der Anmeldung: 12.08.1998
(73) Patentinhaber: REITTER & SCHEFENACKER GmbH & Co. KG, D-73730 Esslingen (DE); MC Micro Compact Car Aktiengesellschaft, 2500 Biel 4 (CH)
(72) Erfinder: Stopp, Walter, 73226 Deggingen (DE); Esser, Gerhard, 73779 Deizisau (DE); Rappl, Christian, 71083 Herrenberg (DE); Butsch, Erwin, 71397 Leutenbach (DE)
(74) Vertreter: Kohl, Karl-Heinz

(56) Entgegenhaltungen:
- EP-A- 0 148 797
- EP-A- 0 268 815
- EP-A- 0 307 317
- DE-A- 3 925 430
- US-A- 4 139 234
- US-A- 5 035 096

## Beschreibung

Die Erfindung betrifft ein Fahrzeugfenster, insbesondere für Kraftfahrzeuge, nach dem Oberbegriff des Anspruches 1 sowie ein Verfahren zur Montage eines solchen Fahrzeugfensters nach dem Oberbegriff des Anspruches 10.

Bei einem solchen bekannten Fahrzeugfenster (EP-A-0 268 815) wird die Fensterscheibe am Rand von einem Schließrahmen umgriffen, der Z-förmigen Querschnitt hat. Auf den Rand der Einbauöffnung ist ein Winkelprofil aufgesteckt, dessen in Richtung auf die Fensterscheibe ragender Schenkel sägezahnartige Formschlußelemente hat, mit denen die Winkelleiste in entsprechende Gegenformschlußelemente in einer Nut des senkrecht von der Fensterscheibe abstehenden Schenkels des Schließrahmens eingreift. Die Fensterscheibe und der Schließrahmen befinden sich auf der gleichen Seite des Randes der Einbauöffnung, so daß zusätzliche Sicherungsmaßnahmen vorgesehen werden müssen, um ein Lösen der Rastverbindung und damit ein Lösen der Fensterscheibe zu verhindern.

Es sind auch Fahrzeugfenster bekannt, bei denen am Rand der Fensterscheibe eine Randbeschichtung als Klemmprofil mit einer Klemmleiste vorgesehen ist. Sie hat als Formschlußelement eine Nut, in die ein am Schließrahmen vorgesehener und von ihm abstehender umlaufender Befestigungssteg eingerastet wird. Damit das Fahrzeugfenster an der Karosserie des Fahrzeuges gehalten wird, muß das Fahrzeugfenster am Rand der Einbauöffnung verklebt werden. Aufgrund des zusätzlichen Klebevorganges ist die Montage des Fahrzeugfensters aufwendig und teuer.

Es ist auch bekannt, die Fensterscheibe eines Fahrzeugfensters in eine umlaufende Nut eines zweiteiligen Schließrahmens einzusetzen. Der Schließrahmen hat den die Nut aufweisenden Grundkörper sowie eine Klemmleiste, die mit einem umlaufenden Formschlußteil in eine entsprechende Nut des anderen Schließrahmenteiles eingreift. Die Nut ist auf der Rückseite des Schließrahmens vorgesehen. Da der Schließrahmen aus zwei Teilen besteht, sind bei der Montage des Fahrzeugfensters zwei Steckvorgänge erforderlich, um die Fensterscheibe mit dem einen Schließrahmenteil und diesen wiederum mit dem anderen Schließrahmenteil in Form einer Klemmleiste zusammenzufügen. Darum erfordert auch dieses Fahrzeugfenster eine aufwendige und damit teure Montage.

Es ist schließlich ein Fahrzeugfenster bekannt, bei dem die Fensterscheibe mittels eines Klebers an den Rand der Einbauöffnung angeklebt wird.

Der Erfindung liegt die Aufgabe zugrunde, das gattungsgemäße Fahrzeugfenster und das gattungsgemäße Verfahren so auszubilden, daß das Fahrzeugfenster in nur wenigen Arbeitsschritten einfach, schnell und kostengünstig montiert werden kann.

Diese Aufgabe wird beim gattungsgemäßen Fahrzeugfenster erfindungsgemäß mit den kennzeichnenden Merkmalen des Anspruches 1 und beim gattungsgemäßen Verfahren erfindungsgemäß mit den kennzeichnenden Merkmalen des Anspruches 10 gelöst.

Beim erfindungsgemäßen Fahrzeugfenster sind zur Montage am Fahrzeug lediglich das fensterscheibenseitige Formschlußelement sowie das am Schließrahmen vorgesehene Gegenformschlußelement in einem Verfahrensschritt miteinander zu verbinden. Dabei deckt der Schließrahmen das Gegenformschlußelement ab, so daß es von der Einbauöffnung aus nicht zu sehen ist. Außer dem Steckvorgang sind zusätzliche Arbeitsschritte nicht erforderlich; insbesondere ist es nicht notwendig, das Fahrzeugfenster am Rand der Einbauöffnung anzukleben.

Beim erfindungsgemäßen Verfahren werden die Fensterscheibe und der Schließrahmen von beiden Seiten der Einbauöffnung aus an deren Rand angelegt. Dann werden der fensterscheibenseitige Formschlußteil und der Gegenformschlußteil des Schließrahmens durch Stecken miteinander verbunden. Der Rand der Einbauöffnung befindet sich dann im Bereich zwischen der Fensterscheibe und dem Schließrahmen, so daß das Fahrzeugfenster einwandfrei in seiner Einbaulage gehalten wird. Aufgrund dieser formschlüssigen Verbindung sind zusätzliche Klebungen nicht erforderlich.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: eine Außenansicht eines erfindungsgemäßen Fahrzeugfensters,
- Fig. 2: eine Innenansicht des Fahrzeugfensters gemäß Fig. 1,
- Fig. 3: eine Ansicht in Richtung des Pfeiles III in Fig. 1,

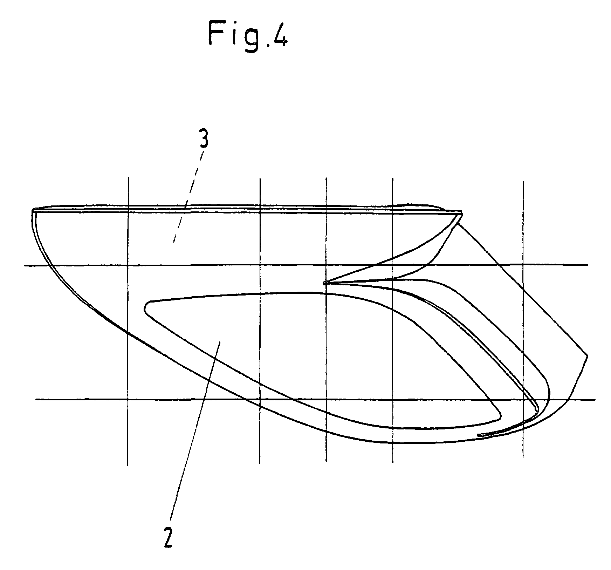

- Fig. 4: eine Ansicht in Richtung des Pfeiles IV in Fig. 3,
- Fig. 5: einen Schließrahmen des erfindungsgemäßen Fahrzeugfensters in einer Ansicht von innen,
- Fig. 6: den Schließrahmen gemäß Fig. 5 in einer Ansicht von außen,
- Fig. 7: einen Schnitt längs der Linie VII-VII in Fig. 5 durch den Schließrahmen, der mit einer Fensterscheibe verbunden ist,
- Fig. 8: einen Schnitt längs der Linie VIII-VIII in Fig. 5 durch den Schließrahmen, an dem eine Fensterscheibe befestigt ist.

Das Fahrzeugfenster ist für ein Kraftfahrzeug vorgesehen und im Ausführungsbeispiel ein Seitenfenster des Kraftfahrzeuges. Das Fenster hat einen umlaufenden Schließ- oder Halterahmen 1, an dem eine Fensterscheibe 2 befestigt ist. Der Rahmen 1 besteht vorteilhaft aus Kunststoff. Die Fensterscheibe 2 ist aus einem thermoplastischen, insbesondere glasklaren Kunststoff hergestellt, beispielsweise aus PMMA oder PC. Auf die Außenseiten der Fensterscheibe 2 kann ein kratzfester Überzug aufgebracht werden, wie zum Beispiel Silikonlack.

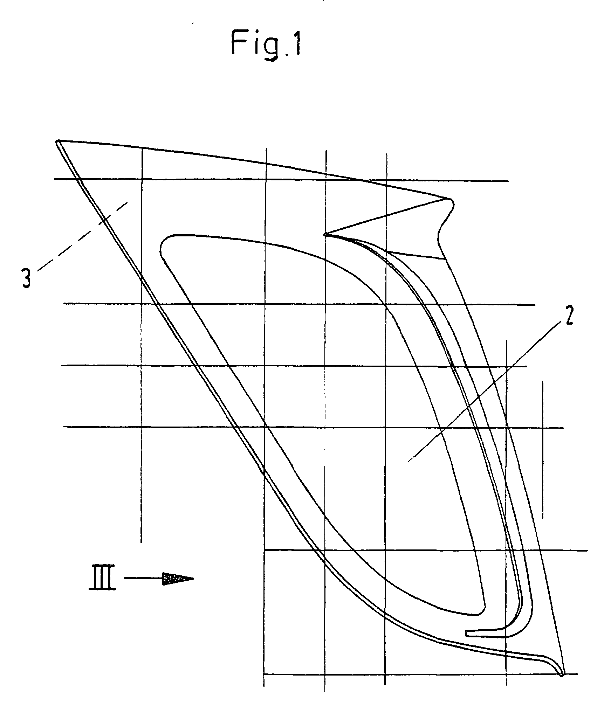

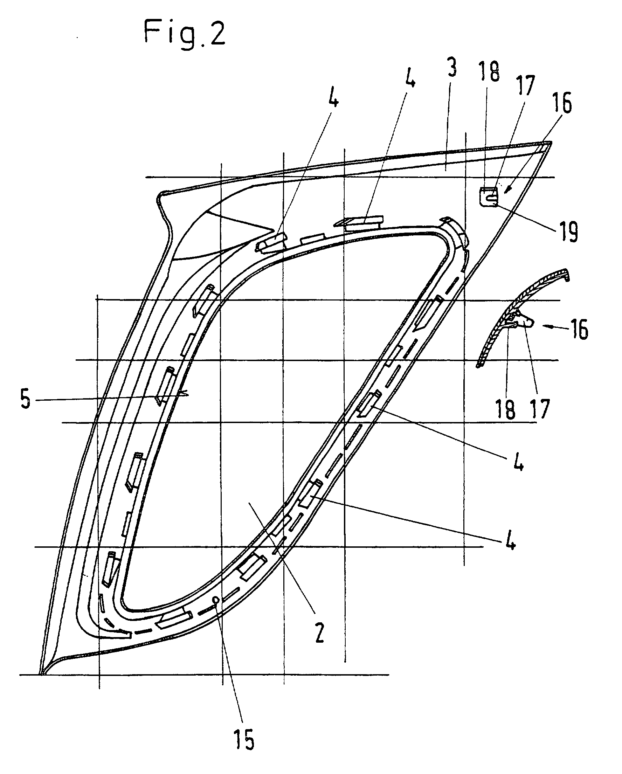

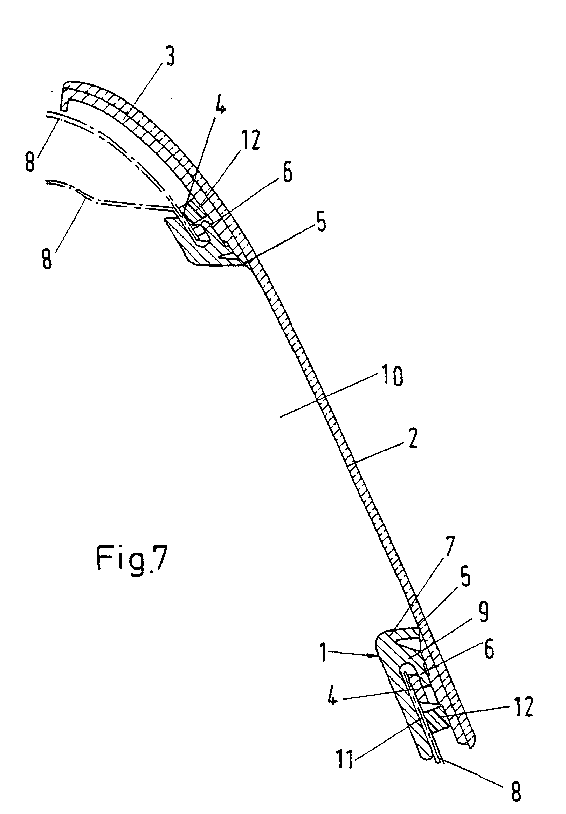

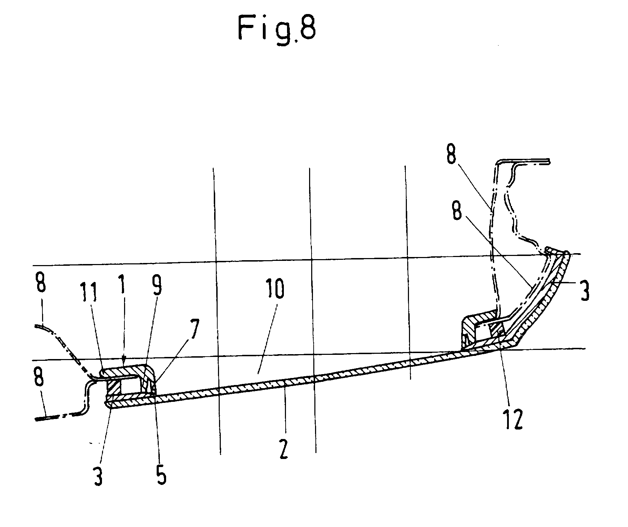

Wie die Fig. 7 und 8 zeigen, ist an der Innenseite der Fensterscheibe 2 ein umlaufender Rahmen 3 vorgesehen, der vorteilhaft aus eingefärbtem Kunststoff besteht, beispielsweise aus ABS oder einer Mischung aus ABS und PC. Die Verbindung zwischen der Fensterscheibe 2 und dem Rahmen 3 erfolgt durch oberflächliches Anschmelzen dieser beiden Teile während des Spritzvorganges. Der Rahmen 3 ist zum Beispiel schwarz eingefärbt und hat, wie die Fig. 1 und 2 zeigen, über seinen Umfang unterschiedliche Breite. Je nach Ausbildung des Fahrzeugfensters kann der Rahmen 3 selbstverständlich über seinen Umfang auch konstante Breite haben. Die Fensterscheibe 2 und der fest mit ihr verbundene Rahmen 3 bilden eine Baueinheit, die in noch zu beschreibender Weise mit dem Schiießrahmen 1 formschlüssig verbunden wird.

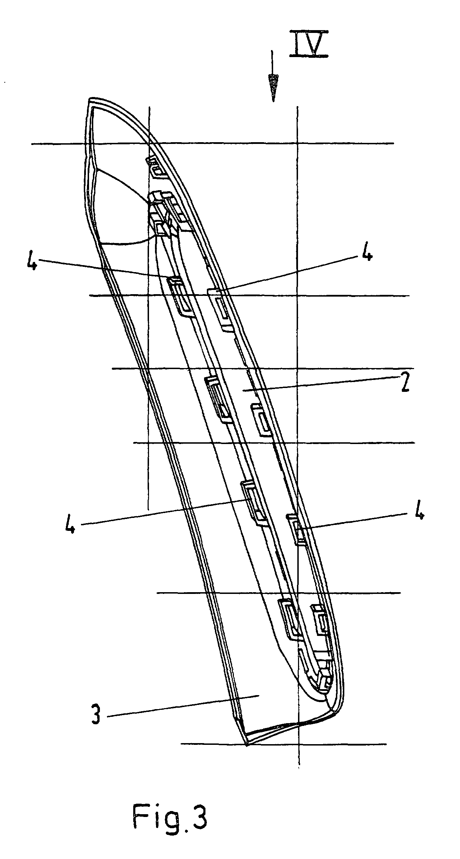

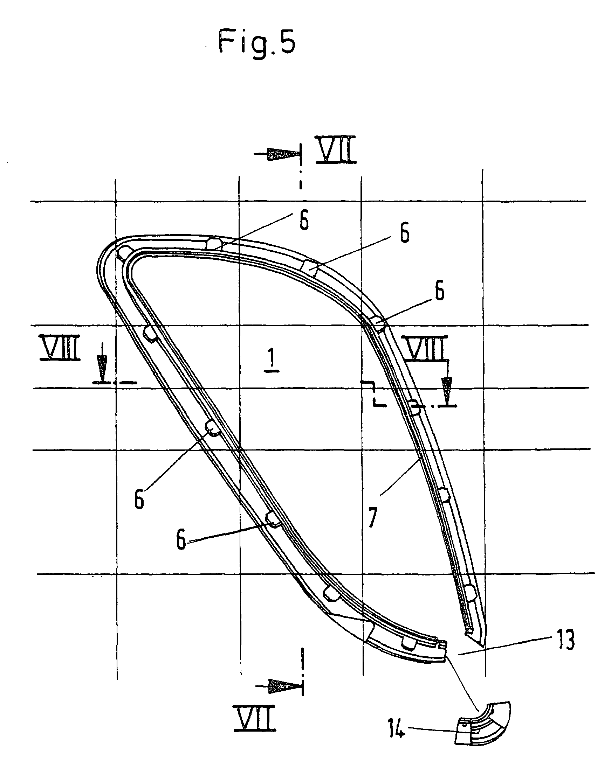

Der Rahmen 3 weist über seinen Umfang verteilt angeordnete Formschlußelemente 4 auf, die im Ausführungsbeispiel jeweils als Bügel ausgebildet sind, die an der von der Fensterscheibe 2 abgewandten Seite des Rahmens 3 nahe seinem Innenrand 5 abstehen. Wie sich aus den Fig. 2 und 3 ergibt, erstrecken sich die bügelförmigen Formschlußelemente 4 zumindest annähernd parallel zum benachbarten Teil des Innenrandes 5 des Rahmens 3. Die Formschlußelemente 4 sind somit in Richtung auf die vom Rahmen 3 umschlossene Fensteröffnung offen. Die Formschlußelemente 4 wirken bei der Montage des Fahrzeugfensters mit Gegenformschlußelementen 6 zusammen, die am Schließrahmen 1 vorgesehen sind (Fig. 5). Sie sind als Nasen ausgebildet, die in die Bügelöffnungen der Formschlußelemente 4 des Rahmens 3 eingesetzt werden. Wie Fig. 5 zeigt, sind die Gegenformschlußelemente 6 ebenfalls über den Umfang des Schließrahmens 1 verteilt angeordnet. Vorteilhaft ist jedem Formschlußelement 4 ein Gegenformschlußelement 6 zugeordnet, so daß eine sichere Befestigung des Fahrzeugfensters gewährleistet ist.

Der Schließrahmen 1 hat, wie die Fig. 7 und 8 zeigen, einen umlaufenden, gegen den Rahmen 3 bzw. die Fensterscheibe 2 gebildeten Rand 7, der sich quer zum Rahmen 3 bzw. zur Fensterscheibe 2 erstreckt und der in der Einbaulage des Fahrzeugfensters auf dem Rahmen 3 längs dessen Innenrand 5 aufsitzt. Der Rand 7 begrenzt somit zusammen mit dem Rahmen 3 die Fensteröffnung der Fensterscheibe 2. Der Rand 7 deckt die Gegenformschlußelemente 6 in Richtung auf die Fensteröffnung ab, so daß sie bei montiertem Fahrzeugfenster von außen nicht sichtbar sind.

Die nasenförmigen Gegenformschlußelemente 6 sind an der dem Rahmen 3 zugewandten Innenseite des Schließrahmens 1 vorgesehen und greifen in die Formschlußelemente 4 des Rahmens 3 ein (Fig. 7). Die Dicke der Gegenformschlußelemente 6 entspricht vorteilhaft der Höhe der Bügelöffnung der Formschlußelemente 4, so daß der Schließrahmen 1 und die Fensterscheibe 2 mit ihrem Rahmen 3 spielfrei miteinander verbunden und am Karosserieblech 8 gehalten werden können. Unmittelbar benachbart zum Rand 7 hat der Schließrahmen 1 einen weiteren Rand 9, der ebenfalls quer vom Schließrahmen 1 absteht und mit dem der Schließrahmen in der Einbaulage mit Abstand vom Innenrand 5 auf dem Rahmen 3 der Fensterscheibe 2 aufsitzt (Fig. 8). Die beiden Ränder 7, 9 liegen im Querschnitt V-förmig zueinander. Im Bereich der Gegenformschlußelemente 6 (Fig. 7) ist der innere Rand 9 nach außen derart abgebogen, daß die nasenförmigen Gegenformschlußelemente 6 gebildet werden.

Die Dicke des Rahmens 3 nimmt von seinem Innenrand 5 aus bis in Höhe der Formschlußelemente 4 vorzugsweise stetig zu. Der Rand 7 des Schließrahmens 1 liegt am Innenrand 5 auf dem Rahmen 3 der Fensterscheibe 2 auf, während der Rand 9 auf demjenigen Bereich am Rahmen 3 aufliegt, in dem dieser konstante Dicke hat. Abweichend vom dargestellten Ausführungsbeispiel kann der Rahmen 3 selbstverständlich am Innenrand 5 gleiche Dicke wie im übrigen Bereich haben.

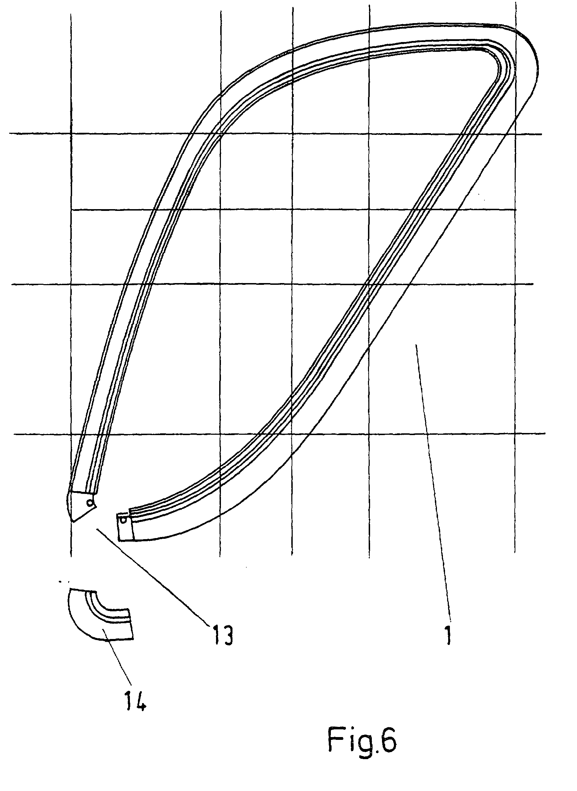

Die Karosserie 8 des Fahrzeuges hat eine Einbauöffnung 10 (Fig. 7 und 8) für das Fahrzeugfenster. Die Einbauöffnung 10 wird von einem Rand 11 des Karosseriebleches 8 begrenzt. Die Fensterscheibe 2 mit dem Rahmen 3 wird unter Zwischenlage einer umlaufenden Dichtung 12 an die Außenseite des Karosserieblechrandes 11 angesetzt (Fig. 7 und 8). Anschließend wird von der Innenseite des Fahrzeuges aus der Schließrahmen 1 mit seinen nasenförmigen Gegenformschlußelementen 6 in die bügelförmigen Formschlußelemente 4 des Fensterscheibenrahmens 3 eingefädelt. Um diesen Einfädelvorgang zu ermöglichen, ist der Schließrahmen 1 offen ausgebildet, wie die Fig. 5 und 6 zeigen. Da der Schließrahmen 1 außerdem biegbar ausgebildet ist, können die nasenförmigen Gegenformschlußelemente 6 nacheinander in die entsprechenden Formschlußelemente 4 des Rahmens 3 gesteckt werden. Der Schließrahmen 1 ist so elastisch ausgebildet, daß dieser Einfädelvorgang einfach möglich ist. Andererseits hat der Schließrahmen 1 quer zu seiner Ebene eine ausreichende Festigkeit, so daß das Fahrzeugfenster in montierter Lage zuverlässig am Karosserieblech 8 gehalten wird. Beim Einfädelvorgang wird der Schließrahmen 1 so weit nach innen gebogen, daß das jeweilige Formschlußelement 6 vom Bereich der Einbauöffnung 10 aus in die Formschlußelemente 4 des Fensterscheibenrahmens 3 gesteckt werden kann.

Der Schließrahmen 1 und/oder die Fensterscheibe 2 mit dem Rahmen 3 sind so ausgebildet, daß sie in der Einbaulage unter elastischer Verformung der Dichtung 12 fest am Rand 11 des Karosseriebleches 8 anliegen. Nach dem Einfädelvorgang wird die im Schließrahmen 1 vorgesehene Öffnung 13 (Fig. 5 und 6) durch ein Schließelement 14 geschlossen, das den offenen Schließrahmen 1 zum geschlossenen Rahmen ergänzt. Das Schließelement 14 ist vorteilhaft als Clipselement ausgebildet, das in den Schließrahmen 1 eingeclipst wird. Die Ausbildung als Clipselement hat den Vorteil, daß es bei einem Austausch der Fensterscheibe einfach vom Schließrahmen 1 entfernt werden kann.

Um eine genaue Lagezuordnung der Fensterscheibe zur Einbauöffnung 10 im Karosserieblech 8 zu ermöglichen, ist der Rahmen 3 der Fensterscheibe 2 mit wenigstens einem Zentrierelement 15 (Fig. 2) versehen, das vorteilhaft als Stift ausgebildet ist und in eine entsprechende Zentrieröffnung im Rand 11 des Karosseriebleches 8 eingreift.

Darüber hinaus ist am Fensterscheibenrahmen 3 mindestens ein Sicherungshalteelement 16 (Fig. 2) vorgesehen, das den elastischen Fensterteil zusätzlich an der Karosserie fixiert und ein Abstehen verhindert. Dieses Sicherungselement 16 hat ein quer abstehendes Clipsteil 17, das in eine (nicht dargestellte) Öffnung im Karosserieblech 8 eingeclipst wird. Das Clipsteil 17 ist formschlüssig in einem Halteteil 18 gehalten, das eine randoffene Einführöffnung 19 aufweist, über die das Clipsteil 17 in das Halteteil 18 eingesetzt wird. Das Clipsteil 17 hat ein verbreitertes Endstück, mit dem es in den Rand der Einführöffnung 19 untergreift.

Das Fahrzeugfenster ist im dargestellten Ausführungsbeispiel ein Seitenfenster des Fahrzeuges. Das Fahrzeugfenster kann aber auch ein Rückfenster oder die Windschutzscheibe eines Fahrzeuges sein. Infolge der beschriebenen Ausbildung läßt sich das Fahrzeugfenster sehr einfach am Fahrzeug montieren und bei Bedarf auch demontieren. Insbesondere kann das Fahrzeugfenster sehr schnell montiert werden, da sich der Schließrahmen 1 einfach und ohne Mühe in der beschriebenen Weise mit der Fensterscheibe 2 formschlüssig verbinden läßt. Weitere Montageschritte als der Einfädelvorgang sind nicht erforderlich. Die Fensterscheibe 2 mit dem Rahmen 3 kann in einem einzigen Werkzeug gespritzt werden, so daß das Fahrzeugfenster kostengünstig gefertigt werden kann.

## Patentansprüche

1. Fahrzeugfenster, insbesondere für Kraftfahrzeuge, mit einer Fensterscheibe (2), die längs ihres Randes formschlüssig mit einem Schließrahmen (1) verbunden ist, der mit wenigstens einem Gegenformschlußelement (6), das durch einen Rand (7) des Schließrahmens (1) gegen eine Einbauöffnung (10) des Fahrzeuges abgedeckt ist, in mindestens ein Formschlußelement (4) eingreift und längs des Randes der Einbauöffnung (10) verläuft,
**dadurch gekennzeichnet, daß** das Formschlußelement (4) an einem mit der Rückseite der Fensterscheibe (2) fest verbundenen Fensterrahmen (3) angeordnet ist, daß sich das Gegenformschlußelement (6) des Schließrahmens (1) quer zu einer durch die Einbauöffnung (10) verlaufenden Achse dieser Einbauöffnung (10) erstreckt, und daß der Fensterrahmen (3) und der Schließrahmen (1) an einander gegenüberliegenden Seiten des Randes (11) der Einbauöffnung (10) liegen.

2. Fahrzeugfenster nach Anspruch 1,
**dadurch gekennzeichnet, daß** der Schließrahmen (1) am Innenrand (5) des Rahmens (3) der Fensterscheibe (2) aufliegt, und daß vorzugsweise der Rahmen (3) und die Fensterscheibe (2) aus Kunststoff bestehen und vorteilhafterweise durch Spritzgießen miteinander verbunden sind.

3. Fahrzeugfenster nach Anspruch 1 oder 2,
**dadurch gekennzeichnet, daß** die Fensterscheibe (2) aus thermoplastischem durchsichtigem, insbesondere glasklarem Kunststoff besteht.

4. Fahrzeugfenster nach einem der Ansprüche 1 bis 3,
**dadurch gekennzeichnet, daß** der Rahmen (3) aus eingefärbtem thermoplastischen Kunststoff besteht.

5. Fahrzeugfenster nach einem der Ansprüche 1 bis 4,
**dadurch gekennzeichnet, daß** der Schließrahmen (1) unterbrochen ist und daß die dadurch entstehende Öffnung (13) durch wenigstens ein Schließelement (14) verschließbar ist, das vorteilhaft als Clipsteil ausgebildet ist.

6. Fahrzeugfenster nach einem der Ansprüche 1 bis 5,
**dadurch gekennzeichnet, daß** der Schließrahmen (1) über seinen Umfang verteilt mehrere, vorzugsweise taschenförmig ausgebildete Gegenformschlußelemente (6) aufweist, und daß sich die Gegenformschlußelemente (6) vorteilhaft etwa parallel zur Fensterscheibe (2) erstrecken.

7. Fahrzeugfenster nach einem der Ansprüche 1 bis 6,
**dadurch gekennzeichnet, daß** der Rahmen (3) der Fensterscheibe (2) über seinen Umfang verteilt mehrere Formschlußelemente (4) aufweist, die vorzugsweise bügelförmig ausgebildet sind und von der von der Fensterscheibe (2) abgewandten Rückseite des Rahmens (3) abstehen.

8. Fahrzeugfenster nach einem der Ansprüche 1 bis 7,
**dadurch gekennzeichnet, daß** der Schließrahmen (1) den Rand (11) der Einbauöffnung (10) übergreift, und daß vorteilhaft der Rahmen (3) der Fensterscheibe (2) auf der einen Seite und der Schließrahmen (1) im wesentlichen auf der anderen Seite des Randes (11) der Einbauöffnung (10) angeordnet sind.

9. Fahrzeugfenster nach einem der Ansprüche 1 bis 8,
**dadurch gekennzeichnet, daß** der Rahmen (3) der Fensterscheibe (2) und der Schließrahmen (11) jeweils unter Spannung am Rand (11) der Einbauöffnung (10) anliegen, und daß vorzugsweise das Formschlußelement (4) am Rand (11) der Einbauöffnung (10) anliegt.

10. Verfahren zur Montage des Fahrzeugfensters nach einem der Ansprüche 1 bis 9, bei dem die Fensterscheibe über das Formschlußteil mit dem Gegenformschlußteil des Schließrahmens durch Stecken verbunden wird,
**dadurch gekennzeichnet, daß** die Fensterscheibe (2) und der Schließrahmen (1) von beiden Seiten an den Rand (11) der Einbauöffnung (10) angelegt werden, und daß durch elastische Verformung des Schließrahmens (1) das Gegenformschlußelement (6) in das fensterscheibenseitige Formschlußelement (4) so eingesetzt wird, daß die Fensterscheibe (2) und der Schließrahmen (1) an beiden Seiten des Randes (11) der Einbauöffnung (10) unter Vorspannung anliegen.

11. Verfahren nach Anspruch 10,
**dadurch gekennzeichnet, daß** die Öffnung (13) des Schließrahmens (1) nach der Verbindung mit der Fensterscheibe (2) durch das Schließelement (14) verschlossen wird.

## Claims

1. A vehicle window, in particular for motor vehicles, with a window pane (2), which is connected along its edge with positive locking to a closing frame (1) which engages with at least one positively locking counter member (6) - covered by an edge (7) of the closing frame (1) against a fitting opening (10) of the vehicle - in at least one positively locking member (4) and extends along the edge of the fitting opening (10), **characterized in that** the positively locking member (4) is arranged on a window frame (3) rigidly connected to the rear side of the window pane (2), the positively locking counter member (6) of the closing frame (1) extends transversely to an axis of the fitting opening (10) extending through the said fitting opening (10), and the window frame (3) and the closing frame (1) rest against mutually opposite sides of the edge (11) of the fitting opening (10).

2. A vehicle window according to Claim 1, **characterized in that** the closing frame (1) rests against the inner edge (5) of the frame (3) of the window pane (2), and the frame (3) and the window pane (2) preferably consist of plastics material and are advantageously joined to each other by injection-moulding.

3. A vehicle window according to Claim 1 or 2, **characterized in that** the window pane (2) consists of thermoplastic transparent, in particular clear, plastics material.

4. A vehicle window according to one of Claims 1 to 3, **characterized in that** the frame (3) consists of tinted thermoplastic plastics material.

5. A vehicle window according to one of Claims 1 to 4, **characterized in that** the closing frame (1) is interrupted, and the spacing (13) formed as a result can be closed by at least one closing member (14) advantageously constructed in the form of a clip part.

6. A vehicle window according to one of Claims 1 to 5, **characterized in that** the closing frame (1) comprises a plurality of preferably pocket-shaped positively locking counter members (6) distributed over its periphery, and the positively locking counter members (6) advantageously extend substantially parallel to the window pane (2).

7. A vehicle window according to one of Claims I to 6, **characterized in that** the frame (3) of the window pane (2) has a plurality of positively locking counter members (4) which are distributed over its periphery and which are preferably yoke-shaped and project from the rear side of the frame (3) remote from the window pane (2).

8. A vehicle window according to one of Claims 1 to 7, **characterized in that** the closing frame (1) engages over the edge (11) of the fitting opening (10), and in an advantageous manner the frame (3) of the window pane (2) is arranged on one side and the closing frame (1) is arranged substantially on the other side of the edge (11) of the fitting opening (10).

9. A vehicle window according to one of Claims 1 to 8, **characterized in that** the frame (3) of the window pane (2) and the closing frame (1) each rest under stress against the edge (11) of the fitting opening (10), and the positively locking member (4) preferably rests against the edge (11) of the fitting opening (10).

10. A method of mounting the vehicle window according to one of Claims 1 to 9, in which the window pane is connected by plugging to the positively locking counter member of the closing frame by way of the positively locking member, **characterized in that** the window pane (2) and the closing frame (1) are applied on both sides to the edge (11) of the fitting opening (10), and the positively locking counter member (6) is inserted into the positively locking member (4) towards the window pane by resilient deformation of the closing frame (1) in such a way that the window pane (2) and the closing frame (1) rest against both sides of the edge (11) of the fitting opening (10) with pre-stressing.

11. A vehicle window according to Claim 10, **characterized in that** the spacing (13) of the closing frame (1) is closed by the closing member (14) after joining to the window pane (2).

## Revendications

1. Fenêtre de véhicule, en particulier pour des véhicules automobiles, comportant une vitre (2) qui est reliée le long de sa bordure en coopération de formes à un cadre de fermeture (1), qui s'engage par au moins un élément complémentaire à coopération de formes (6), recouvert par une bordure (7) du cadre de fermeture (1) contre une ouverture de montage (10) du véhicule, dans au moins un élément à coopération de formes (4) et qui s'étend le long de la bordure de l'ouverture de montage (10), **caractérisée en ce que** l'élément à coopération de formes (4) est agencé sur un cadre de fenêtre (3) fermement relié à la face arrière de la vitre (2), **en ce que** l'élément complémentaire à coopération de formes (6) du cadre de fermeture (1) s'étend perpendiculairement à un axe de l'ouverture de montage (10), qui traverse cette ouverture de montage (10), et **en ce que** le cadre de fenêtre (3) et le cadre de fermeture (1) se situent sur des côtés opposés l'un à l'autre de la bordure (11) de l'ouverture de montage (10).

2. Fenêtre de véhicule selon la revendication 1, **caractérisée en ce que** le cadre de fermeture (1) repose sur la bordure intérieure (5) du cadre (3) de la vitre (2), et **en ce que** de préférence le cadre (3) et la vitre (2) sont constitués en matière plastique et sont reliés l'un à l'autre avantageusement par moulage par injection.

3. Fenêtre de véhicule selon l'une ou l'autre des revendications 1 et 2, **caractérisée en ce que** la vitre (2) est constituée en matière thermoplastique transparente, en particulier avec la transparence du verre.

4. Fenêtre de véhicule selon l'une quelconque des revendications 1 à 3, **caractérisée en ce que** le cadre (3) est constitué en matière thermoplastique colorée.

5. Fenêtre de véhicule selon l'une quelconque des revendications 1 à 4, **caractérisée en ce que** le cadre de fermeture (1) est interrompu, et **en ce que** l'ouverture (13) qui en résulte peut être refermée par au moins un élément de fermeture (14) qui est réalisé avantageusement sous la forme d'une pièce à clipser.

6. Fenêtre de véhicule selon l'une quelconque des revendications 1 à 5, **caractérisée en ce que** le cadre de fermeture (1) comprend plusieurs éléments complémentaires à coopération de formes (6) répartis sur sa périphérie et réalisés de préférence en forme de poches, et **en ce que** les éléments complémentaires à coopération de formes (6) s'étendent avantageusement approximativement parallèlement à la vitre (2).

7. Fenêtre de véhicule selon l'une quelconque des revendications 1 à 6, **caractérisée en ce que** le cadre (3) de la vitre (2) comprend plusieurs éléments à coopération de formes (4) répartis sur sa périphérie, qui sont réalisés de préférence en forme d'anses et qui font saillie de la face arrière du cadre (3) détournée de la vitre (2).

8. Fenêtre de véhicule selon l'une quelconque des revendications 1 à 7, **caractérisée en ce que** le cadre de fermeture (1) coiffe la bordure (11) de l'ouverture de montage (10), et **en ce que** le cadre (3) de la vitre (2) est agencé avantageusement sur un côté, et le cadre de fermeture (1) est agencé sensiblement sur l'autre côté de la bordure (11) de l'ouverture de montage (10).

9. Fenêtre de véhicule selon l'une quelconque des revendications 1 à 8, **caractérisée en ce que** le cadre (3) de la vitre (2) et le cadre de fermeture (11) prennent appui chacun sous contrainte contre la bordure (11) de l'ouverture de montage (10), et **en ce que** de préférence l'élément à coopération de formes (4) prend appui contre la bordure (11) de l'ouverture de montage (10).

10. Procédé pour monter une fenêtre de véhicule selon l'une quelconque des revendications 1 à 9, dans lequel on relie la vitre par enfichage via l'élément à coopération de formes à l'élément complémentaire à coopération de formes du cadre de fermeture, **caractérisé en ce que** l'on pose la vitre (2) et le cadre de fermeture (1) depuis les deux côtés contre la bordure (11) de l'ouverture de montage (10), et **en ce que** l'on met en place, par déformation élastique du cadre de fermeture (1), l'élément complémentaire à coopération de formes (6) dans l'élément à coopération de formes (4) côté vitre, de telle sorte que la vitre (2) et le cadre de fermeture (1) prennent appui sous précontrainte contre les deux côtés de la bordure (11) de l'ouverture de montage (10).

11. Procédé selon la revendication 10, **caractérisé en ce que** l'on referme l'ouverture (13) du cadre de fermeture (1), après l'avoir relié à la vitre (2), par l'élément de fermeture (14).
